# EUROPEAN PATENT APPLICATION

(11) **EP 4 725 988 A1**
(43) Date of publication of application: **15.04.2026**
(21) Application number: 26159367.7
(22) Date of filing: 18.02.2026
(51) Int. Cl.: C08K 9/10, C09B 67/02, C09D 7/40, C09D 7/80, C09D 17/00

(54) **PIGMENT PASTE IN A CAPSULE**

(71) Applicant: Inchem Polonia, 92-612 Lodz (PL)
(72) Inventor: Tokarska, Marta, 92-612 Lodz (PL)

(57) **Abstract**

Polyvinyl alcohol PVA film capsule pigment paste is characterized by the fact that the pigment paste is contained in a polyvinyl alcohol film capsule, whereby the capsule is completely dissolved in a coating agent with the release of a full dose of pigment paste.

## Description

The subject matter of the invention relates to a pigment paste for staining a coating agent, in particular a coating agent with a high content of solids, as well as a coating agent which contains pigment paste. In addition, the invention concerns a method of colouring a coating agent with the use of pigment paste. The present invention also applies to water-soluble sachets which contain pigment paste. Pigment pastes for colouring coating agents, such as paints and varnishes, are generally known. Pigment pastes are usually made by dispersing pigments and possibly fillers in binders or other suitable materials and mixed with a suitable base paint before use. These types of mixed paint systems outperform conventional coatings, especially in terms of procurement and logistics. The equipment for mixing paints to the colour chosen by the customer is well known. Basically, they are based on dispensing paint dye or pigment paste into a base paint container to produce the paint of the desired colour. Usually, metal cans are used as packaging for paint dye compositions. This type of packaging is very stable and durable. The disadvantage of such packaging is that it takes a lot of space to collect empty packaging. Another disadvantage is that this type of packaging is difficult to empty completely. In addition, emptying is time-consuming and often troublesome. Moreover, metal-based canisters have become more expensive due to the increase in raw material and energy prices. Recent advances in packaging development have led to the use of flexible packaging for many products. This type of packaging is mainly for single use. Once opened, it must no longer be closed again in such a way as to protect the contents for an extended period of time. The contents are usually dispensed from the container in its entirety at once. Another disadvantage is the accuracy of the dosing of pigment paste with the agents discussed above, which reaches values of 91-95%.

The two-layer structural profile, according to the invention, is characterized by the fact that it consists of an upper layer and a lower layer, formed by the bending of one plane of the sheet metal, connected by embossing. The ribs connecting the profile layers are dovetail-shaped. The purpose of the invention is to develop a product that meets the following characteristics: packaging of pigment paste in a completely innovative form - in the form of a capsule completely soluble in paint/plaster, accuracy of paste dosing, pro-ecological nature of the product, resulting from the elimination of plastic packaging that is difficult to process, optimized pigment paste recipe, necessary to produce a time-stable capsule. Pigment paste in PVA film capsule based on vinyl alcohol is characterized by the fact that a weighted amount of pigment paste is enclosed in a capsule made of polyvinyl alcohol film with a thickness of 70 µm, resistant to dissolution during storage, whereby the capsule is completely dissolved in a coating agent with the release of a full dose of pigment paste. The subject of the invention is presented in an example of execution. The water-soluble foil material in which the colouring pigment paste is enclosed contains polyvinyl alcohol (obtained as a result of polymerisation of vinyl acetate and hydrolysis of the resulting polyacetate). The thickness of the capsule is optimally 70µm, which has been shown by numerous studies, the analysis of the obtained test results has shown that the pressure force of 300 N on the capsule filled with the tested pigment pastes does not cause its unsealing. Enclosing the pigment paste in a specially developed, paint- and plaster-soluble capsule results in the complete elimination of waste, which is currently used packaging made of various types of plastics. The accuracy of dosing pigment paste from the bottle is at the level of 90%, i.e. about 10% of the product remains in the package and becomes waste. Thanks to the use of a soluble packaging of pigment paste, which is a capsule, it is possible to achieve 100% accuracy of dosing pigment paste to the coloured product. Typically, a pigment paste contains a certain content of water and other liquid substances. It was therefore necessary to investigate what amount of water and other excipients would not corrode the capsule from the inside, while ensuring its rapid solubility in paint/ and plaster. The target product, thanks to its formulation, will not cause the capsule to dissolve during storage, and at the same time the capsule will dissolve in paint and plaster. The optimal water content of a maximum of 5% was determined by conducting research. The indicated amount of water was obtained by using the following pigment paste: polyglycol 30-76%, demineralized water 1-4%, dispersant.1 3-8%, dispersant.2 1-10%, pH regulator 0.2-1.3%, defoamer 0.2%, biocide 0.3%, thickener 0.003 - 0.3%, pigments suitable from 15 to 70%.

The development of an innovative capsule, soluble in paint or plaster, brings benefits in the form of: Elimination of waste in the form of polyethylene bottles, ensuring excellent colour reproducibility through precise dosing of pigment paste, achieving dosing accuracy of 100%. eliminating the problem of paste depositing on the walls and achieving perfect colour uniformity, free puncture of the capsule with pigment paste in the paint within a maximum of 1 hour, carrying out durability tests during storage in different climatic conditions, ensuring the durability of the product by controlling changes during storage depending on the temperature and humidity of the air.

## Claims

1. Pigment paste in PVA film capsule based on vinyl alcohol is **characterized by** the fact that a weighted amount of pigment paste is enclosed in a capsule made of polyvinyl alcohol film with a thickness of 70 µm, resistant to dissolution during storage, whereby the capsule is completely dissolved in a coating agent with the release of a full dose of pigment paste.
